# EUROPEAN PATENT SPECIFICATION

(11) **EP 0 489 473 B1**
(45) Date of publication and mention of the grant of the patent: **24.02.1999**
(21) Application number: 91203138.2
(22) Date of filing: 29.11.1991
(51) Int. Cl.: C08G 67/02

(54) **Process for the preparation of polyketones**
Verfahren zur Herstellung von Polyketonen
Procédé pour la préparation de polycétones

(30) Priority: 03.12.1990 NL 9002645
(43) Date of publication of application: 10.06.1992
(73) Proprietor: SHELL INTERNATIONALE RESEARCH MAATSCHAPPIJ B.V., 2596 HR Den Haag (NL)
(72) Inventor: Klusener, Peter Anton August, NL-1031 CM Amsterdam (NL); Snel, Johannes Jacobus Maria, NL-1031 CM Amsterdam (NL)

(56) References cited:
- EP-A- 0 121 965
- EP-A- 0 181 014
- EP-A- 0 376 364
- EP-A- 0 384 517
- EP-A- 0 490 445

## Description

The invention relates to a process for the preparation of polymers of carbon monoxide with one or more α-olefins having at least three carbon atoms per molecule.

It is known that linear polymers of carbon monoxide with ethene in which polymers the units from carbon monoxide and ethene are present in a substantially alternating order can be prepared by contacting the monomers at elevated temperature and pressure with a catalyst composition containing a Group VIII metal and a phosphorus bidentate ligand with the general formula (R¹)₂P-R-P(R¹)₂ in which R¹ represents an optionally polar substituted monovalent aromatic hydrocarbyl group and R is a divalent organic bridging group. This bridging group R preferably contains, in the bridge connecting the two phosphorus atoms, three atoms, of which at least two are carbon atoms and among which no two atoms are present which together form part of a single cyclic structure. It appeared that phosphorus bidentate ligands in which such a bridge occurs provide catalyst compositions having the highest polymerization rate. An example of such a phosphorus bidentate ligand is 1,3-bis(diphenylphosphino)propane.

A drawback of the alternating carbon monoxide/ethene copolymers is that they have a very high melting point. The processing of these polymers should take place in the molten state with the material being at a temperature which is at least 25°C above the melting point. It has been found that these polymers are not as resistant to the high temperatures required in their processing, as a result of which discoloration and decomposition can take place. As a solution for this problem the applicant found, as proposed in EP-A-213671, that the melting point of these polymers can be considerably reduced by incorporating in the monomer mixture from which they are prepared, a relatively small quantity of one or more α-olefins having at least three carbon atoms per molecule (indicated for short as C₃₊ α-olefins). The more C₃₊ α-olefins are incorporated in the monomer mixture, the lower the melting point of the polymers obtained. It was also found that the previously mentioned catalyst compositions which exhibited the highest polymerization rate in the polymerization of carbon monoxide with ethene because they contained a phosphorus bidentate ligand with three atoms in the bridge, also exhibited the highest polymerization rate in the polymerization of carbon monoxide with ethene and additionally one or more C₃₊ α-olefins.

The applicant recently carried out an investigation in order to find out to what extent, with the use of the above-mentioned catalyst compositions, linear polymers of carbon monoxide with one or more C₃₊ α-olefins (i.e. without ethene) can be prepared in which the units from carbon monoxide and C₃₊ α-olefins occur in a substantially alternating manner. It was found that such polymers can indeed be prepared in this way, but that the catalyst compositions exhibited only a low polymerization rate in comparison with their previously observed rate in the polymerization of carbon monoxide with ethene and optional, additional, C₃₊ α-olefin(s). Just as had previously been observed in the polymerization of carbon monoxide with ethene and in the polymerization of carbon monoxide with ethene and additionally with one or more C₃₊ α-olefins, it was also established in the polymerization of carbon monoxide with one or more C₃₊ α-olefins that catalyst compositions containing a phosphorus bidentate ligand with three atoms in the bridge exhibit the highest polymerization rate. As described in EP-A-376364, continued research by the applicant into this subject showed that the polymerization rate of the previously mentioned catalyst compositions for the polymerization of carbon monoxide with one or more C₃₊ α-olefins could be raised by replacing the optionally polar substituted monovalent aromatic R¹ hydrocarbyl groups in the phosphorus bidentate ligand by optionally polar substituted monovalent aliphatic R² hydrocarbyl groups. In view of the observed relationship between the polymerization rate and the number of carbon atoms in the bridge of the phosphorus bidentate ligand, in the polymerization of carbon monoxide with all sorts of α-olefins using catalyst compositions containing a phosphorus bidentate ligand in which the optionally polar substituted monovalent hydrocarbyl groups linked to phosphorus were aromatic, it would be logical to assume that the same relationship would hold for such catalyst compositions containing bidentate ligands in which the hydrocarbyl groups linked to phosphorus are aliphatic, i.e. that the highest polymerization rate is achieved using ligands in which the bridge contains three atoms. An example of a phosphorus bidentate ligand of this type with the general formula (R²)₂P-R-P(R²)₂ is 1,3-bis(di-n-butylphosphino)propane.

In the course of continued research into this subject it has now been surprisingly found that the activity of the last mentioned catalyst compositions for the polymerization of carbon monoxide with one or more C₃₊ α-olefins can be raised by selecting as the bridging group R in the phosphorus bidentate ligand, a divalent organic bridging group R³ which is a tetramethylene group. It was further found that an increase of the activity of the catalyst compositions by selecting as the phosphorus bidentate ligand with the general formula (R²)₂P-R-P(R²)₂, a phosphorus bidentate ligand with the general formula (R²)₂P-R³-P(R²)₂, also occurs in the polymerization of carbon monoxide with ethene and additionally with one or more C₃₊ α-olefins. In complete contrast with this it has been found that a selection of this kind in the polymerization of carbon monoxide with ethene leads to a decrease in the polymerization rate. Finally it was found that the activity of catalyst compositions containing a phosphorus bidentate ligand with the general formula (R²)₂P-R³-P(R²)₂ in the polymerization of carbon monoxide with one or more C₃₊ α-olefins and optionally also with ethene can be raised further by replacing therein at each of the two phosphorus atoms one of the R² groups by an optionally polar substituted aliphatic hydrocarbyl group differing in carbon number from R². Corresponding with the previously observed anomalous behaviour of the catalyst compositions containing a phosphorus bidentate ligand with the general formula (R²)₂P-R³-P(R²)₂ in the polymerization of carbon monoxide with ethene, it was now also found in this polymerization that a replacement of this kind led to a decrease in the polymerization rate. Evidently, the favourable effects on the polymerization rate obtained with the above-described modifications of the phosphorus bidentate ligand are only obtained if the catalyst composition is used for polymerizing a monomer mixture containing C₃₊ α-olefins.

EP-A-121965 and EP-A-181014 disclose catalyst compositions which contain a Group VIII metal and 1,4-bis(dicyclohexyl-phosphino)butane. However, nothing is disclosed as regards the performance of these compositions in the copolymerization of carbon monoxide with one or more C₃₊ α-olefins and optionally also with ethene.

EP-A-384517 is concerned with the preparation of stereoregular polymers of carbon monoxide and an α-olefin having at least three carbon atoms, by using in the palladium containing catalyst composition an asymmetric phosphorus bidentate ligand, such as a ligand of which the bridge connecting the phosphorus atoms participates in a ring structure. This documents discloses the use of (-)-4,5-bis(dibutylphosphinomethyl)-2,2-dimethyl-1,3-dioxolane, which is a ligand which contains a single ring structure in the bridge. The working examples in EP-A-384517 indicate that the use of ligands with such bridging groups leads to a drastic reduction in the polymerisation rate of carbon monoxide with propene (cf. example 5 vs. example 2).

The patent application relates to a process for the preparation of polymers in which process a mixture of carbon monoxide with one or more C₃₊ α-olefins and optionally also with ethene is contacted at elevated temperature and pressure with a catalyst composition containing a Group VIII metal and a phosphorus bidentate ligand with the general formula (R²)(R⁴)P-R³-P(R²)(R⁴) in which R² and R⁴ are identical or different optionally polar substituted monovalent aliphatic hydrocarbyl groups and in which R³ is a tetramethylene group.

In this patent application, Group VIII metals are understood to be the noble metals ruthenium, rhodium, palladium, osmium, iridium and platinum, as well as the iron group metals iron, cobalt and nickel.

In the catalyst compositions according to the invention the Group VIII metal is preferably chosen from palladium, nickel and cobalt. Palladium is particularly preferred as Group VIII metal. The incorporation of the Group VIII metal in the catalyst compositions preferably takes place in the form of a salt of a carboxylic acid, in particular in the form of an acetate. In addition to a Group VIII metal and a phosphorus bidentate ligand, the catalyst compositions used in the process according to the invention preferably also contain an anion of an acid with a pKa of less than 4 and in particular an anion of an acid with a pKa of less than 2. Examples of acids with a pKa of less than 2 are mineral acids such as sulphuric acid and perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. A sulphonic acid such as para-toluenesulphonic acid or a halocarboxylic acid such as trifluoroacetic acid is preferred. The anion can be introduced into the catalyst compositions either in the form of a compound from which the desired anion splits off or in the form of a mixture of compounds from which the desired anion is formed by mutual reaction. As a rule, the anion is incorporated in the catalyst compositions in the form of an acid. If desired, the anion can also be included in the catalyst composition in the form of a main group metal salt or a non-noble transition metal salt of the acid in question. If an anion of a carboxylic acid is chosen, its incorporation in the catalyst composition can take place in the form of the acid or in the form of a derivative thereof, such as an alkyl or aryl ester, an amide, an imide, an anhydride, an ortho-ester, a lactone, a lactam or an alkylidene dicarboxylate. The anion is preferably present in the catalyst compositions in a quantity of 1-100 and in particular 2-50 mol per g.atom Group VIII metal. As well as by its application as a separate component, the anion of an acid with a pKa of less than 4 can also be present in the catalyst compositions by the use of, for example, palladium trifluoroacetate or palladium para-tosylate as Group VIII metal compound.

In addition to a Group VIII metal, a phosphorus bidentate ligand and optionally an anion of an acid with a pKa of less than 4, the catalyst compositions used in the process according to the invention can also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-benzoquinone and 1,4-naphthoquinone are preferred. The quantity of organic oxidizing agent employed is preferably 5-5000 and in particular 10-1000 mol per g.atom Group VIII metal.

In the catalyst compositions used in the process according to the invention the phosphorus bidentate ligand is preferably present in a quantity of 0.5-2 and in particular 0.75-1.5 mol per g.atom Group VIII metal. In the phosphorus bidentate ligands with the general formula (R²)(R⁴)P-R³-P(R²)(R⁴) the R³ bridging group is the tetramethylene group. In the phosphorus bidentate ligands the R² and R⁴ groups preferably each contain not more than 10 carbon atoms. As has been explained above, phosphorus bidentate ligands can be used in the catalyst compositions used in the process according to the invention in which the R² and R⁴ groups are identical. Advantageous results are obtained according to the invention by using catalyst compositions containing a phosphorus bidentate ligand in which the R² and R⁴ groups are identical, such as 1,4-bis(di-n-butylphosphino)butane. There is preference for the use of phosphorus bidentate ligands in which the R² and R⁴ groups differ from each other in carbon number. Very advantageous results are obtained according to the invention by using catalyst compositions containing a phosphorus bidentate ligand in which the R² and R⁴ groups are alkyl groups differing from each other in carbon number, one being methyl, such as 1,4-bis(methyl, n-butylphosphino)butane.

The polymerization according to the invention is preferably carried out by contacting the monomers with a solution of the catalyst composition in a diluent in which the polymers are insoluble or almost insoluble. Lower alcohols such as methanol are very suitable as diluent. If desired, the polymerization can also be carried out in the gas phase.

As regards the C₃₊ α-olefins used in the polymer preparation according to the invention, there is preference for α-olefins with a maximum of 10 carbon atoms per molecule. There is further preference for the use of monomer mixtures in which besides carbon monoxide and optionally ethene only one C₃₊ α-olefin is present. Examples of suitable C₃₊ α-olefins are propene, pentene-1 and 4-methylpentene-1. The process according to the invention is particularly very suitable for the preparation of copolymers of carbon monoxide with propene and for the preparation of terpolymers of carbon monoxide with ethene and with propene.

The quantity of catalyst composition used in the preparation of the polymers can vary within wide limits. Per mol of olefin to be polymerized, a quantity of catalyst composition is preferably used which contains 10⁻⁷-10⁻³ and in particular 10⁻⁶-10⁻⁴ g.atom Group VIII metal.

The preparation of the polymers is preferably carried out at a temperature of 25-150°C and a pressure of 2-150 bar and in particular at a temperature of 30-130°C and a pressure of 5-100 bar.

The invention is illustrated further by the following examples.

### Example 1

A carbon monoxide/ethene copolymer was prepared as follows. Into a stirred autoclave with a volume of 100 ml from which the air had been driven by purging with nitrogen, a catalyst solution was introduced consisting of:
40 ml methanol,
0.05 mmol palladium acetate,
0.055 mmol 1,3-bis(diphenylphosphino)propane, and
0.1 mmol para-toluenesulphonic acid.

After forcing in a 1:1 carbon monoxide/ethene mixture to a pressure of 40 bar, the contents of the autoclave were heated to 90°C. During the polymerization the pressure was kept constant by forcing in a 1:1 carbon monoxide/ethene mixture. After 1 hour the polymerization was terminated by cooling the reaction mixture to room temperature and releasing the pressure. The polymer was filtered off, washed with methanol and dried.

17.7 g copolymer was obtained. The polymerization rate was 3300 g copolymer/(g palladium.hour).

### Examples 2-5

Example 1 was repeated with the difference that instead of 1,3-bis(diphenylphosphino)propane the bidentate ligand listed in Table I was used. The obtained yields (in g copolymer) and polymerization rates (in g copolymer/(g palladium.hour) are listed in Table I as well.

**TABLE I**

| Ex. | ligand | yield | rate |
|---|---|---|---|
| 1 | 1,3-bis(diphenylphosphino)propane | 17.7 | 3300 |
| 2 | 1,4-bis(diphenylphosphino)butane | 13.3 | 2480 |
| 3 | 1,3-bis(di-n-butylphosphino)propane | 5.4 | 1010 |
| 4 | 1,4-bis(di-n-butylphosphino)butane | 4.0 | 750 |
| 5 | 1,4-bis(methyl,n-butylphosphino)butane | 1.8 | 330 |

### Example 6

A carbon monoxide/ethene/propene terpolymer was prepared as follows. Into a stirred autoclave with a volume of 100 ml from which the air had been driven by purging with nitrogen, a catalyst solution was introduced consisting of:
40 ml methanol,
0.05 mmol palladium acetate,
0.055 mmol 1,3-bis(diphenylphosphino)propane, and
0.1 mmol paratoluenesulphonic acid.

After adding 9.3 g propene, the temperature was raised to 90°C, after which a 1:1 carbon monoxide/ethene mixture was forced in until a pressure of 40 bar was reached. During the polymerization the pressure was kept constant by forcing in a 1:1 carbon monoxide/ethene mixture. After 1 hour the polymerization was terminated by cooling the reaction mixture to room temperature and releasing the pressure. The polymer was filtered off, washed with methanol and dried.

13.9 g terpolymer was obtained. The polymerization rate was 2590 g terpolymer/(g palladium.hour).

### Examples 7-13

Example 6 was repeated with the differences that sometimes instead of 1,3-bis(diphenylphosphino)propane one of the bidentate ligands also used in Examples 2-5 was used, and that the amount of propene (in g) listed in Table II was forced in instead of 9.3 g. The obtained yields (in g terpolymer) and polymerization rates (in g terpolymer/(g palladium.hour) are listed in Table II as well.

**TABLE II**

| Ex. | ligand of Example | propene | notes | yield | rate |
|---|---|---|---|---|---|
| 6 | 1 | 9.3 | | 13.9 | 2590 |
| 7 | 2 | 10.3 | | 6.1 | 1140 |
| 8 | 1 | 10.5 | (a) | 29.4 | 5480 |
| 9 | 2 | 10.2 | (a) | 17.2 | 3200 |
| 10 | 3 | 11.5 | (b) | 1.2 | 150 |
| 11 | 4 | 10.0 | | 4.7 | 880 |
| 12 | 4 | 12.3 | (a) | 5.8 | 1080 |
| 13 | 5 | 12.2 | (a) | 6.4 | 2000 |

| | | | | | |
|---|---|---|---|---|---|
| (a) : the gas mixture was forced in until a pressure of 55 bar was obtained instead of 40 bar. | | | | | |
| (b) : the reaction time was 1.5 hours instead of 1 hour. | | | | | |

### Example 14

A carbon monoxide/propene copolymer was prepared as follows. Into a stirred autoclave with a volume of 100 ml from which the air had been driven by purging with nitrogen, a catalyst solution was introduced consisting of:
40 ml methanol,
0.05 mmol palladium acetate,
0.055 mmol 1,3-bis(di n-butylphosphino)propane, and
0.1 mmol para-toluenesulphonic acid.

After adding 10.7 g propene, the temperature was raised to 60°C, after which carbon monoxide was forced in until a pressure of 40 bar was reached. During the polymerization the pressure was kept constant by forcing in carbon monoxide. After 3 hours the polymerization was terminated by cooling the reaction mixture to room temperature and releasing the pressure. The polymer was isolated by evaporation of the reaction mixture.

2.5 g copolymer was obtained. The polymerization rate was 160 g copolymer/(g palladium.hour).

### Examples 15-18

Example 14 was repeated with the differences that instead of 1,3-bis(di-n-butylphosphino)propane the bidentate ligand also used in Example 4 or 5 was used, and that the amount of propene (in g) listed in Table III was forced in instead of 10.7 g. The obtained yields (in g copolymer) and polymerization rates (in g copolymer/(g palladium.hour) are listed in Table III as well.

**TABLE III**

| Ex. | ligand of Example | propene | notes | yield | rate |
|---|---|---|---|---|---|
| 14 | 3 | 10.7 | | 2.5 | 160 |
| 15 | 4 | 8.4 | | 6.1 | 380 |
| 16 | 4 | 12.0 | (c,d) | 2.7 | 510 |
| 17 | 5 | 9.7 | (e) | 8.2 | 490 |
| 18 | 5 | 12.2 | (f,d) | 4.1 | 760 |

| | | | | | |
|---|---|---|---|---|---|
| (c) : the reaction temperature was 90 °C instead of 60 °C. | | | | | |
| (d) : the reaction time was 1 hour instead of 3 hours. | | | | | |
| (e) : the reaction time was 3.2 hours instead of 3 hours. | | | | | |
| (f) : the catalyst solution contained 0.11 mmol perchloric acid instead of para-toluenesulphonic acid, and also contained 1 ml trimethyl orthoformate. | | | | | |

### Example 19

A carbon monoxide/propene copolymer was prepared in substantially the same way as in example 14, but with the following differences:
a) the polymerization was carried out in an autoclave with a volume of 300 ml instead of 100 ml,
b) a catalyst solution was used consisting of 120 ml methanol instead of 40 ml and 1,4-bis(methyl, n-butylphosphino)butane instead of 1,3-bis(di n-butylphosphino)propane,
c) 27.0 g propene was introduced into the autoclave instead of 10.7 g,
d) the reaction temperature was 70°C instead of 60°C, and
e) the reaction time was 1 hour instead of 3 hours. 6.4 g copolymer was obtained. The polymerization rate was 1190 g copolymer/(g palladium.hour).

### Example 20

A carbon monoxide/propene copolymer was prepared in substantially the same way as in example 14, but with the following differences:
a) the polymerization was carried out in an autoclave with a volume of 300 ml instead of 100 ml,
b) a catalyst solution was used consisting of:
   120 ml methanol,
   0.1 mmol palladium acetate,
   0.11 mmol 1,4-bis(di n-butylphosphino)butane, and
   0.2 mmol para-toluenesulphonic acid,
c) 23.0 g propene was introduced into the autoclave instead of 10.7 g,
d) the reaction temperature was 80°C instead of 60°C, and
e) the reaction time was 1 hour instead of 3 hours. 7.5 g copolymer was obtained. The polymerization rate was 710 g copolymer/(g palladium.hour).

Of the examples 1-20, examples 11-13 and 15-20 are according to the invention. In these examples carbon monoxide/propene copolymers and carbon monoxide/ethene/propene terpolymers were prepared using catalyst compositions containing a Group VIII metal and a phosphorus bidentate ligand with the general formula (R²)(R⁴)P-R³-P(R²)(R⁴). Examples 1-10 and 14 are included in the patent application for comparison.

Examples 1-5 relate to the preparation of carbon monoxide/ethene copolymers. Comparison of the results of these examples shows the decrease in polymerization rate that occurs if in the catalyst composition a phosphorus bidentate ligand containing three atoms in the bridge connecting the two phosphorus atoms to each other is replaced by a phosphorus bidentate ligand containing a tetramethylene group as the bridge. This applies both for a tetra-aryl- and a tetra-alkylbisphosphine. On replacing a tetra-alkylbisphosphine in which the alkyl groups attached to phosphorus are identical by a tetra-alkylbisphosphine in which the alkyl groups attached to phosphorus differ in carbon number, a further decrease in the polymerization rate takes place.

Examples 6-10 relate to the preparation of carbon monoxide/ethene/propene terpolymers. Comparison of the results of examples 6-9 shows the decrease in polymerization rate that occurs if in the catalyst composition a tetra-arylbisphosphine containing three atoms in the bridge connecting the two phosphorus atoms is replaced by a tetra-arylbisphosphine containing a tetramethylene group as the bridge.

Comparison of the results of examples 10 and 11 and of the results of examples 14 and 15 shows the increase in polymerization rate that occurs both in the preparation of carbon monoxide/ethene/propene terpolymers and in the preparation of carbon monoxide/propene copolymers if in the catalyst composition a tetra-alkylbisphosphine containing three atoms in the bridge connecting the two phosphorus atoms is replaced by a tetra-alkylbisphosphine containing a tetramethylene group as the bridge.

Comparison of the results of examples 12 and 13 and of the results of examples 15 and 17 shows the increase in polymerization rate that occurs both in the preparation of carbon monoxide/ethene/propene terpolymers and in the preparation of carbon monoxide/propene copolymers if a tetra-alkylbisphosphine in which the alkyl groups attached to phosphorus are identical are replaced by a tetra-alkylbisphosphine in which the alkyl groups attached to phosphorus differ in carbon number.

It was established by ¹³C-NMR analysis that the polymers prepared according to examples 1-20 were built up of linear chains in which the units from carbon monoxide on the one hand and the units from the olefin(s) used on the other hand were present in an alternating order. In the terpolymer chains the units from ethene and propene were present in a random distribution.

## Claims

1. Process for the preparation of polymers in which a mixture of carbon monoxide with one or more α-olefins having at least three carbon atoms per molecule (C₃₊ α-olefins) and optionally also with ethene is contacted at elevated temperature and pressure with a catalyst composition which contains a Group VIII metal and a phosphorus bidentate ligand of the general formula (R²)(R⁴)P-R³-P(R²)(R⁴) in which R² and R⁴ are identical or different optionally polar substituted monovalent aliphatic hydrocarbyl groups and in which R³ is a divalent organic bridging group characterized in that the bridging group R³ is a tetramethylene group.

2. Process according to claim 1, characterized in that the catalyst composition additionally contains an anion of an acid with a pKa of less than 4 in a quantity of 1-100 mol per g.atom Group VIII metal.

3. Process according to claim 1 or 2, characterized in that the catalyst composition contains the phosphorus bidentate ligand in a quantity of 0.5-2 mol per g.atom Group VIII metal.

4. Process according to one or more of claims 1-3, characterized in that the catalyst composition contains a phosphorus bidentate ligand in which the R² and R⁴ groups each contain no more than 10 carbon atoms.

5. Process according to one or more of claims 1-4, characterized in that the catalyst composition contains a phosphorus bidentate ligand in which the R² and R⁴ groups are identical alkyl groups.

6. Process according to one or more of claims 1-4, characterized in that the catalyst composition contains a phosphorus bidentate ligand in which the R² and R⁴ groups differ from each other in carbon number.

7. Process according to claim 6, characterized in that the catalyst composition contains a phosphorus bidentate ligand in which the R² and R⁴ groups are alkyl groups which differ in carbon number, one being a methyl group.

8. Process according to one or more of claims 1-7, characterized in that it is carried out at a temperature of 25-150°C, a pressure of 2-150 bar and that per mol of olefin to be polymerized a quantity of catalyst composition is used which contains 10⁻⁷-10⁻³ g.atom Group VIII metal.

## Patentansprüche

1. Verfahren zur Herstellung von Polymeren, worin ein Gemisch aus Kohlenmonoxid mit einem oder mit mehreren α-Olefinen mit wenigstens drei Kohlenstoffatomen pro Molekül (C₃₊-α-Olefine) und gegebenenfalls auch mit Ethen bei erhöhter Temperatur und erhöhtem Druck mit einer Katalysatorzusammensetzung in Kontakt gebracht wird, die ein Gruppe VIII-Metall und einen Phosphorbidentatliganden mit der allgemeinen Formel (R²)(R⁴)P-R³-P(R²)(R⁴) enthält, worin R² und R⁴ gleiche oder verschiedene, gegebenenfalls polar substituierte, einwertige, aliphatische Hydrocarbylgruppen bedeuten und worin R³ eine zweiwertige organische Brückengruppe darstellt, dadurch gekennzeichnet, daß die Brückengruppe R³ eine Tetramethylengruppe ist.

2. Verfahren nach Anspruch 1, dadurch gekennzeichnet, daß die Katalysatorzusammensetzung zusätzlich ein Anion einer Säure mit einem pKa-Wert von kleiner als 4 in einer Menge von 1 bis 100 Mol je Grammatom Gruppe VIII-Metall enthält.

3. Verfahren nach Anspruch 1 oder 2, dadurch gekennzeichnet, daß die Katalysatorzusammensetzung den Phosphorbidentatliganden in einer Menge von 0,5 bis 2 Mol je Grammatom Gruppe VIII-Metall enthält.

4. Verfahren nach einem oder mehreren der Ansprüche 1 bis 3, dadurch gekennzeichnet, daß die Katalysatorzusammensetzung einen Phosphorbidentatliganden enthält, worin die Gruppen R² und R⁴ jeweils nicht mehr als 10 Kohlenstoffatome enthalten.

5. Verfahren nach einem oder mehreren der Ansprüche 1 bis 4, dadurch gekennzeichnet, daß die Katalysatorzusammensetzung einen Phosphorbidentatliganden enthält, worin die Gruppen R² und R⁴ identische Alkylgruppen sind.

6. Verfahren nach einem oder mehreren der Ansprüche 1 bis 4, dadurch gekennzeichnet, daß die Katalysatorzusammensetzung einen Phosphorbidentatliganden enthält, worin die Gruppen R² und R⁴ sich in ihrer Kohlenstoffanzahl unterscheiden.

7. Verfahren nach Anspruch 6, dadurch gekennzeichnet, daß die Katalysatorzusammensetzung einen Phosphorbidentatliganden enthält, worin die Gruppen R² und R⁴ Alkylgruppen sind, die sich in ihrer Kohlenstoffanzahl unterscheiden, wobei eine eine Methylgruppe ist.

8. Verfahren nach einem oder mehreren der Ansprüche 1 bis 7, dadurch gekennzeichnet, daß es bei einer Temperatur von 25 bis 150°C, einem Druck von 2 bis 150 bar ausgeführt wird und daß pro Mol zu polymerisierendem Olefin eine Menge an Katalysatorzusammensetzung verwendet wird, die 10⁻⁷ bis 10⁻³ Grammatom Gruppe VIII-Metall enthält.

## Revendications

1. Procédé de préparation de polymères conformément auquel on met un mélange de monoxyde de carbone et d'une ou plusieurs α-oléfines comportant au moins trois atomes de carbone par molécule (α-oléfines C₃₊) et éventuellement aussi de l'éthène, en contact, à température et à pression élevées, avec une composition catalytique qui contient un métal du groupe VIII et un ligand bidentate du phosphore répondant à la formule générale (R²)(R⁴)P-R³-P(R²)(R⁴) dans laquelle R² et R⁴ sont des radicaux hydrocarbyle aliphatiques monovalents à substitution polaire éventuelle identiques ou différents et dans laquelle R³ est un groupe de pontage organique divalent, caractérisé en ce que le groupe de pontage R³ est le radical tétraméthylène.

2. Procédé suivant la revendication 1, caractérisé en ce que la composition catalytique contient en outre un anion d'un acide qui possède un pKa inférieur à 4, en une quantité de 1 à 100 moles par atome-gramme de métal du groupe VIII.

3. Procédé suivant la revendication 1 ou 2, caractérisé en ce que la composition catalytique contient le ligand bidentate du phosphore en une quantité de 0,5 à 2 moles par atome-gramme de métal du groupe VIII.

4. Procédé suivant une ou plusieurs des revendications 1 à 3, caractérisé en ce que la composition catalytique contient un ligand bidentate du phosphore dans lequel les groupes R² et R⁴ ne contiennent chacun pas plus de 10 atomes de carbone.

5. Procédé suivant une ou plusieurs des revendications 1 à 4, caractérisé en ce que la composition catalytique contient un ligand bidentate du phosphore dans lequel les groupes R² et R⁴ sont des radicaux alkyle identiques.

6. Procédé suivant l'une quelconque des revendications 1 à 4, caractérisé en ce que la composition catalytique contient un ligand bidentate du phosphore dans lequel les groupes R² et R⁴ diffèrent mutuellement par le nombre d'atomes de carbone.

7. Procédé suivant la revendication 6, caractérisé en ce que la composition catalytique contient un ligand bidentate du phosphore dans lequel les groupes R² et R⁴ sont des radicaux alkyle qui diffèrent par le nombre d'atomes de carbone, l'un d'entre eux étant le radical méthyle.

8. Procédé suivant une ou plusieurs des revendications 1 à 7, caractérisé en ce qu'on l'entreprend à une température de 25 à 150°C, sous une pression de 2 à 150 bars et en ce que, par mole d'oléfine à polymériser, on utilise une quantité de composition catalytique qui contient de 10⁻⁷ à 10⁻³ atome-gramme de métal du groupe VIII.
